# EUROPEAN PATENT SPECIFICATION

(11) **EP 0 552 610 B1**
(45) Date of publication and mention of the grant of the patent: **12.03.1997**
(21) Application number: 93100145.7
(22) Date of filing: 07.01.1993
(51) Int. Cl.: A01D 34/66, F16H 57/02

(54) **Gear bar particularly for cutter bars of rotary disk-mowers**
Getriebegehäuse, insbesondere für Mähbalken von Scheibenmäher
Barre d'engrenage, en particulier pour barre de coupe de faucheuses à disques rotatifs

(30) Priority: 10.01.1992 IT MI920020
(43) Date of publication of application: 28.07.1993
(73) Proprietor: COMER S.p.A., I-42046 Villanova di Reggiolo, (Province of Reggio Emilia) (IT)
(72) Inventor: Brunazzi, Achille, I-42040 Santa Vittoria (Emilia) (IT)
(74) Representative: Modiano, Guido, Dr.-Ing.

(56) References cited:
- EP-A- 0 060 600
- EP-A- 0 239 034
- EP-A- 0 279 889
- WO-A-90/14754
- FR-A- 2 228 417
- FR-A- 2 582 381
- GB-A- 1 532 613
- GB-A- 2 030 247
- GB-A- 2 089 636
- US-A- 3 604 185

## Description

The present invention relates to a gear bar particularly for cutter bars of rotary disk-mowers.

As is known, cutter bars used in rotary disk-mowers are formed by means of a box-like body which comprises an upper half-shell or half-casing which couples to a lower half-shell or half-casing; it is also possible to provide, in replacement of the upper half-shell, a flat lid connected to the lower half-shell.

Said box-like body which constitutes the bar supports, inside it, actuation gears which are connected to shafts which protrude outside the box-like body, where the cutter disk is connected. The various actuation gears are mutually interconnected by idler gears supported by pivots or bushes connected to the upper half-shell or to both half-shells.

Known solutions, such as for example the one illustrated in US patent no. 3,604,185, connect the idler gear supporting pivot only to the upper half-shell, with considerable economic advantages, since it is not necessary to perform machining operations to position the pivots on the lower half-shell.

However, this solution has the disadvantage of having poor overall rigidity, so that deformations of the bar can occur in the presence of flexural and torsional stresses.

Another known solution, such as for example the one shown in US patent 3,916,725, connects the idler gear supporting pivot both to the upper half-shell and to the lower half-shell.

In practice, this embodiment provides for an upper bush, connected by welding to the upper half-shell, which is connected to a lower bush connected by welding to the lower half-shell.

A conical coupling with a slight lateral play is formed between the two bushes, and said bushes are joined by means of a through bolt.

With this embodiment, due to the presence of lateral play between the bushes, it is necessary to provide a sealed joint for the lubricant and it is furthermore necessary to perform a relatively precise machining of the bush coupling seats.

Furthermore, due to the presence of axial play, relative movements of the two half-shells with respect to each other may be observed under the action of the intense flexural and torsional stresses to which the bar is subjected during work in the field.

EP-A 060 600 discloses a gear bar for the cutter bars of rotary disk-mowers. The gear bar comprises a box-like body having an upper and a lower half-shell which supports, inside it, gears for the actuation of the cutter disks and idle gears which mutually connect the actuation gears. Pivots support the idle gears, each pivot being constituted by a through element which joins the half-shells and is provided with coupling regions which are subjected to force (press) fitting, in respective upper and lower holes formed by the half-shells, so as to form seats for sealed coupling between the through element and the box-like body. A main disadvantage of this solution is the fact that the through element and its seat in the box like body must be machined with very high precision, to ensure a sealed coupling between them.

The aim of the invention is to solve the problems described above by providing a gear bar particularly for cutter bars of rotary mowers which overcomes the problems encountered in the known gear bars.

Within this aim, an object of the invention is to provide a gear bar which provides a sealed coupling between the through pivot and the half-shells which constitute the box-like body, consequently eliminating the need for additional gaskets.

A particular object of the invention is to provide a gear bar which does not require narrow tolerances in the shape and location of the through pivot engagement holes provided on the lower half-shell and on the upper half-shell, thus allowing to obtain said holes without having to resort to machining on a machine tool.

Another object of the present invention is to provide a gear bar wherein a considerable stiffening of the structure formed by the two half-shells is achieved without thereby leading to constructive complications.

Not least object of the present invention is to provide a gear bar which, by virtue of its peculiar constructive characteristics, is capable of giving the greatest assurances of reliability and safety in use.

This aim, the objects mentioned and others which will become apparent hereinafter are achieved by a gear bar particularly for cutter bars of rotary disk-mowers, according to the invention, with the features of Claim 1.

Further characteristics and advantages will become apparent from the description of some preferred but not exclusive embodiments of a gear bar particularly for cutter bars of rotary disk-mowers, illustrated only by way of non-limitative example in the accompanying drawings, wherein:
figure 1 is a schematic plan view of a gear bar;
figure 2 is a sectional and partially exploded view of a supporting pivot for the idler gears;
figure 3 is a sectional view of a first embodiment of a supporting pivot for the idler gears;
figure 4 is a sectional view of a second embodiment of the supporting pivot;
figure 5 is a sectional view of a further embodiment of the supporting pivot.

With reference to the above figures, the gear bar particularly for cutter bars of rotary disk-mowers, according to the invention, which is generally designated by the reference numeral 1, comprises a box-like body 2 which is constituted, in a per se known manner, by an upper half-shell or lid 3 and by a lower half-shell 4 which are mutually coupled.

Inside the box-like body 2 there are actuation gears 5 which are connected, by means of a shaft which protrudes from the box-like body, to the disks which support the cutter elements. The various actuation gears 5 are mutually connected by means of idler or intermediate gears which are designated by the reference numeral 8.

The peculiarity of the device is constituted by the fact that the idler gears 8 are supported, by means of the interposition of rolling bearings 10, by supporting pivots 11, each of which is substantially constituted by a through element which joins the half-shells.

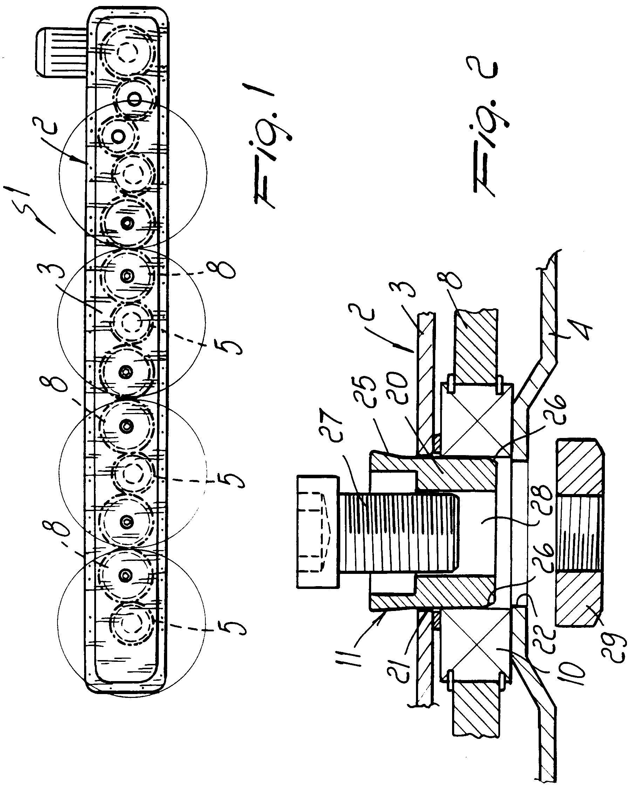

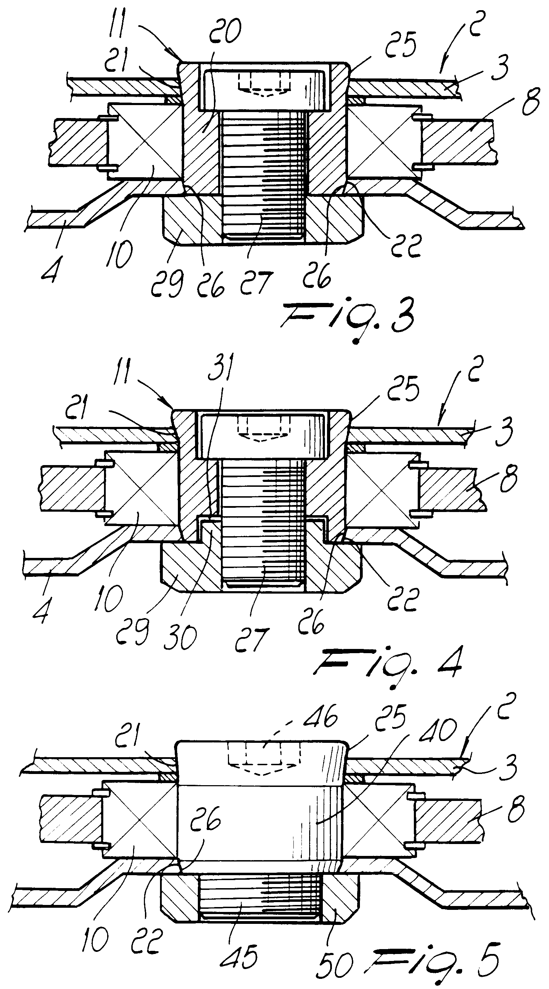

More in detail, as shown in figures 2 and 3, the through element is constituted by a bush 20 which has a substantially cylindrical shape and is inserted in an upper hole 21 formed by the upper half-shell 3 and in a lower hole 22 formed by the lower half-shell 4.

The bush 20 is provided, at the regions where it couples to the holes 21 and 22, with coupling regions constituted by an upper frustum-shaped portion 25 and by a lower frustum-shaped portion 26 which can be inserted, by being force fitted, into the holes 21 and 22 respectively.

More specifically, the bush is made of a material which is harder than the material which constitutes the half-shells, so that forcing by deformation is obtained when the frustum-shaped portions 25 and 26 are coupled to the respective holes, creating in practice frustum-shaped seats at the holes 21 and 22 and providing, in addition to a mechanical locking, a sealing action which avoids the use of gaskets to seal in the lubricant contained in the box.

As shown in figures 2 and 3, there is also a through bolt, designated by the reference numeral 27, which enters a through channel 28 formed by the bush 20 and is locked by means of a nut 29 which, by abutting on the lower half-shell 4, provides an axial locking action, with consequent insertion of the bush 20 into the holes 21 and 22.

The embodiment illustrated in figure 4 is similar to the preceding ones, the only variation being that the nut 29 has an axial tang 30 which can be accommodated within a depression 31 provided axially on the bush, so that under equal conditions the axial length of the nut which engages the bolt 27 is increased.

In the embodiment illustrated in figure 5, the joining element is constituted by a pivot, designated by the reference numeral 40, which forms, on its lateral surface, the upper and lower frustum-shaped portions, designated by the reference numerals 25 and 26, and ends axially with a bolt-like portion 45 formed monolithically with said pivot. The pivot has, at its other end, a polygonal recess 46 for engagement with an actuation tool.

The bolt-like portion 45 engages an enlarged locking nut designated by the reference numeral 50.

In this embodiment, wherein the bush and the bolt are in practice formed monolithically, it is possible to increase the diameter of the threaded portion constituted by the bolt-like portion, so that it is possible to reproduce higher axial traction values in order to further strengthen the coupling with the half-shells which constitute the box-like body.

From what has been described above it can thus be seen that the device achieves the intended aim and objects and in particular the fact is stressed that the above described embodiments use an idler gear supporting pivot which mutually joins the half-shells of the box-like body and is capable of directly creating during assembly the seats for coupling to the half-shells, without requiring particular machining operations for said seats. The seats do not need to be provided with extreme precision, since said pivot, during the forming of the seats on the half-shells, which are formed by the frustum-shaped portions of said pivot, can even be slightly inclined with respect to said half-shells.

Furthermore, since coupling by plastic deformation of the material is obtained, sealed coupling and mechanical locking are provided without having to resort to a welding operation and to the insertion of sealing gaskets, as instead occurs in the prior art.

The device thus conceived is susceptible to numerous modifications and variations, all of which are within the scope of the claims.

In practice, the materials employed, as well as the contingent shapes or dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Gear bar, particularly for cutter bars of rotary disk-mowers, which comprises a box-like body having and upper and a lower half and supports, inside it, gears for the actuation of driven tools such as the cutter disks and idle gears which mutually connect said actuation gears, and further comprises pivots for supporting said idle gears, each pivot being constituted by a through element which joins said half-shells and is provided with coupling regions which are subjected to force fitting, respectively in an upper hole, formed by said upper shell, and in a lower hole, formed by said lower shell, so as to form seats for sealed coupling betweeen said through element and said box-like body, characterized in that said coupling regions are constituted by an upper and a lower frusto-conical-shaped portion which are provided on said through element and are able to engage, by plastic deformation, in said holes provided respectively on said upper half-shell and on said lower half-shell, coupling means being further provided for the locking of said through element on said box-like body.

2. Gear bar according to claim 1, characterized in that said through element is harder than the material which constitutes said upper half-shell and said lower half-shell, in order to provide a plastic deformation of the material of said upper and lower half-shells so as to produce said seats.

3. Gear bar according to one or more of the preceding claims, characterized in that said through element is constituted by a bush which externally forms said lower and upper frusto-conical-shaped portions and internally forms a through channel for engagement with a through bolt which can be coupled to said coupling means which are constituted by a locking nut which abuts on said lower half-shell.

4. Gear bar according to claim 3, characterized in that said nut has an axial tang which can be coupled in a depression formed correspondingly by said bush.

5. Gear bar according to one or more of the preceding claims, characterized in that said through element is externally provided with said lower and upper frusto-conical-shaped portions and is axially provided, at one end, with a bolt-like portion which is formed monolithically with said pivot, and has, at its other end, a recessed polygonal seat for engagement with a tool.

## Patentansprüche

1. Getriebegehäuse, insbesondere für Schnittbalken von Scheibenmähern, das einem kastenförmigen Körper aufweist, mit oberen und einer unteren Hälfte und innerhalb davon Stützen, Getrieben für den Antrieb von angetriebenen Werkzeugen wie Mähscheiben, und Leerlaufgetrieben, die wechselseitig mit den Antriebsgetrieben verbunden sind wobei das Getriebegehäuse ferner Drehzapfen zur Lagerung der Leerlaugetriebe umfasst, wobei jeder Drehzapfen durch ein Duchgangselement gebildet ist, das die Halbschalen verbindet und mit Kupplungsbereichen versehen ist, die einem Preßsitz jeweils in einer oberen Öffnung, die in der oberen Schale geformt ist, und in einer unteren Öffnung, die in der unteren Schale geformt ist, ausgesetzt sind, um eine Aufnahme für eine abgedichtete Kupplung zwischen dem Durchgangselement und dem kastenförmigen Körper zu bilden,
**dadurch gekennzeichnet, daß** die Kupplungsbereiche durch einen oberen und einen unteren kegelstumpfförmigen Bereich gebildet sind, die an dem Durchgangselement gebildet sind und fähig sind, durch plastische Deformierung jeweils in den auf der oberen Halbschale und auf der unteren Halbschale vorgesehenen Öffnungen in Eingriff zukommen, wobei zusätzlich Kupplungsmittel für das Festsetzen des Durchgangselements an dem kastenförmigen Körper vorgesehen sind.

2. Getriebegehäuse nach Anspruch 1, **dadurch gekennzeichnet, daß** das Durchgangselement härter ist als das die obere Halbschale und die untere Halbschale bildende Material, um eine plastische Deformierung des Materials der oberen und der unteren Halbschalen zu schaffen, so daß die besagte Aufnahme erzeugt wird.

3. Getriebegehäuse nach einem oder mehreren der vorhergehenden Ansprüche, **dadurch gekennzeichnet, daß** das Durchgangselement durch eine Buchse gebildet ist, die außen den unteren und den oberen kegelstumpfförmigen Bereich formt und innen ein Durchgangskanal für einen Einsatz mit einem Durchgangsbolzen geformt ist, der mit den Kupplungsmitteln verbunden werden kann, die durch eine Nutmutter gebildet sind, die an die untere Halbschale anstößt.

4. Getriebegehäuse nach Anspruch 3, **dadurch gekennzeichnet, daß** die Nutmutter einen axialen Schaft hat, der mit einer durch die Buchse geformte korrespondierende Vertiefung gekoppelt werden kann.

5. Getriebegehäuse nach einem oder mehreren der vorhergehenden Ansprüche, **dadurch gekennzeichnet, daß** das Durchgangselement außen mit einem unteren und einem oberen kegelstumpfförmigen Bereich versehen ist und axial an einem Ende mit einem bolzenartigen Bereich versehen ist, der monolithisch mit dem Drehzapfen geformt ist und an seinem anderen Ende eine eingelassene polygonale Aufnahme für einen Eingriff mit einem Werkzeug hat.

## Revendications

1. Boîtier d'engrenage, en particulier pour des barres de coupe de faucheuses à disques rotatifs, qui comprend un corps en forme de boîtier ayant une moitié supérieure et une moitié inférieure et supporte, à l'intérieur de celui-ci, des pignons pour l'actionnement d'outils entraînés, tels que des disques de coupe, et des pignons fous qui relient mutuellement lesdits pignons d'actionnement, et comprenant de plus des pivots pour supporter lesdits pignons fous, chaque pivot étant constitué par un élément traversant qui joint lesdites demi-coques et est muni de zones de couplage qui sont soumises à un montage à force, respectivement dans un trou supérieur, formé par ladite coque supérieure, et dans un trou inférieur, formé par ladite coque inférieure, de façon à former des sièges pour le couplage étanchéifié entre lesdits éléments traversants et ledit corps en forme de boîtier,
caractérisé en ce que lesdites zones de couplage sont constituées par des parties supérieure et inférieure tronconiques qui sont prévues sur ledit élément traversant et sont capables de s'engager, par déformation plastique, dans lesdits trous prévus respectivement sur ladite demi-coque supérieure et sur ladite demi-coque inférieure, des moyens de couplage étant de plus prévus pour le verrouillage dudit élément traversant sur ledit corps en forme de boîtier.

2. Boîtier d'engrenage selon la revendication 1,
caractérisé en ce que ledit élément traversant est plus dur que la matière qui constitue ladite demi-coque supérieure et ladite demi-coque inférieure, de façon à fournir une déformation plastique de la matière desdites demi-coques supérieure et inférieure, de façon à produire lesdits sièges.

3. Boîtier d'engrenage selon une ou plusieurs des revendications précédentes,
caractérisé en ce que ledit élément traversant est constitué par un manchon qui forme extérieurement lesdites parties inférieure et supérieure tronconiques et forme intérieurement un canal traversant pour l'engagement avec un boulon traversant qui peut être couplé auxdits moyens de couplage qui sont constitués par un écrou de verrouillage qui vient en aboutement sur ladite demi-coque inférieure.

4. Boitier d'engrenage selon la revendication 3,
caractérisé en ce que ledit écrou présente une patte axiale qui peut être couplée dans une dépression formée de façon correspondante par ledit manchon.

5. Boîtier d'engrenage selon une ou plusieurs des revendications précédentes,
caractérisé en ce que ledit élément traversant est muni extérieurement desdites parties inférieure et supérieure tronconiques et est axialement muni, à une extrémité, d'une partie analogue à un boulon qui est formé de façon monolithique avec ledit pivot et présente, à son autre extrémité, un siège polygonal évidé pour l'engagement avec un outil.
